# EUROPÄISCHE PATENTSCHRIFT

(11) **EP 4 384 436 B1**
(45) Veröffentlichungstag und Bekanntmachung des Hinweises auf die Patenterteilung: **02.09.2026**
(21) Anmeldenummer: 22743835.5
(22) Anmeldetag: 14.07.2022
(51) Int. Cl.: B62J 33/00, B62J 1/12

(54) **KRAFTRAD MIT SITZANORDNUNG**
MOTORCYCLE WITH A SEAT ARRANGEMENT
MOTO DOTÉE D'UN DISPOSITIF D'ASSISE

(30) Priorität: 12.08.2021 DE 102021121006
(43) Veröffentlichungstag der Anmeldung: 19.06.2024
(73) Patentinhaber: Bayerische Motoren Werke Aktiengesellschaft, 80809 München (DE)
(72) Erfinder: STRASSER, Dieter, 82386 Oberhausen (DE); ISING, Christian, 80687 München (DE)
(86) Internationale Anmeldenummer: PCT/EP2022/069729
(87) Internationale Veröffentlichungsnummer: WO 2023/016743

(56) Entgegenhaltungen:
- DE-A1- 102004 034 675
- JP-A- 2010 058 674
- US-A1- 2004 239 088

## Beschreibung

Die Erfindung betrifft ein Kraftrad mit einer vollständig oder zumindest teilweise von dem Kraftrad lösbaren Sitzanordnung.

Krafträder, wie Motorräder oder Motorroller, weisen üblicherweise eine Sitzanordnung auf, welche eine Sitzfläche für einen oder mehrere Nutzer bildet. Hierzu sind die Sitzanordnungen entweder als Einzelsitze zur Nutzung durch jeweils eine Person pro Sitz oder als Sitzbänke zur Nutzung durch mehrere Nutzer ausgebildet.

Zur Steigerung eines Komforts sind Sitzanordnungen bekannt, die beispielsweise eine elektrisch betreibbare Sitzheizung und/oder eine elektrisch betreibbare Sitzbelüftung aufweisen.

Eine Stromversorgung dieser elektrischen Vorrichtungen erfolgt stets über Stromkabel, welche zwischen der jeweils in der Sitzanordnung integrierten elektrischen Vorrichtung und einer Stromquelle im Fahrzeug verlaufen. Auch können die Stromkabel Teil eines Kabelbaums des Kraftrades sein.

Soll die Sitzanordnung geöffnet oder vollständig vom Kraftrad entfernt werden, so muss der Nutzer stets darauf achten, eine Beschädigung des Stromkabels zu vermeiden. Hierzu ist meist eine manuelle Demontage des Stromkabels, beispielsweise durch Lösen eines zwischengeschalteten Verbindungssteckers, erforderlich. Wird das Lösen des Stromkabels beziehungsweise des Verbindungssteckers übersehen oder nicht vollständig vorgenommen, kann zumindest das Stromkabel beschädigt werden. Aber auch eine Beschädigung der jeweiligen elektrischen Vorrichtung kann nicht ausgeschlossen werden, die einen kompletten Ausfall bedeuten und einen Komplettaustausch der gesamten Sitzanordnung nach sich ziehen kann.

Soll die Sitzanordnung (wieder) montiert oder geschlossen werden, so ist jedes Mal eine erneute Montage der Stromversorgung erforderlich, beispielsweise durch Montage des Stromkabels beziehungsweise durch Anstecken des Verbindungssteckers. Wird dies vergessen, steht die entsprechende Funktion nicht zur Verfügung.

Jedenfalls ist das Lösen sowie das Anstecken des Verbindungssteckers meist unkomfortabel, da der Bauraum begrenzt und daher üblicherweise kleine Stecker zum Einsatz kommen, welche an der Unterseite der Sitzanordnung, insbesondere an der Unterseite einer Sitzwanne, befestigt sind und nur erschwert manuell betätigt werden können. Durch häufiges An- und Abstecken kann es darüber hinaus zu vorzeitigem Ausfall des Verbindungssteckers kommen.

Die 10 2004 034 675 A1 betrifft ein Motorrad mit einem Motorradsitz, in den eine elektrisch beheizbare Sitzheizung integriert ist, wobei am Motorradsitz mindestens ein elektrisches Kontaktelement angeordnet ist, das ein am Motorrad angeordnetes Gegenkontaktelement berührt und die Sitzheizung durch den dadurch gebildeten Berührkontakt mit Strom versorgt wird.

Eine Aufgabe der Erfindung ist es eine derartige Sitzanordnung für ein Kraftrad in vorteilhafter Weise weiterzuentwickeln. Insbesondere soll eine vereinfachte Montage und Demontage der Sitzanordnung auch im Falle eines integrierten elektrischen Verbrauchers ermöglicht werden.

Diese Aufgabe wird gelöst mit einem Kraftrad gemäß dem Gegenstand des Patentanspruchs 1. Vorteilhafte Ausführungsformen ergeben sich aus den abhängigen Patentansprüchen.

Demnach wird ein Kraftrad mit einer vollständig oder zumindest teilweise von dem Kraftrad lösbaren Sitzanordnung bereitgestellt, wobei die Sitzanordnung eine Sitzfläche für einen Nutzer bildet und eine elektrisch betreibbare Vorrichtung aufweist, wobei die elektrisch betreibbare Vorrichtung zur Versorgung mit elektrischer Energie mit einer Energieübertragungsvorrichtung verbunden ist.

Die Energieübertragungsvorrichtung weist auf:
a. einen ersten Leitungsabschnitt, der einer Fahrzeugstruktur zugeordnet und mit einer Energiequelle gekoppelt ist, und
b. einen zweiten Leitungsabschnitt, welcher der Sitzanordnung zugeordnet und mit der elektrisch betreibbaren Vorrichtung elektrisch leitend verbunden ist.

Des Weiteren ist die Energieübertragungsvorrichtung derart ausgebildet, dass der erste Leitungsabschnitt und der zweite Leitungsabschnitt mittels Anordnens der Sitzanordnung in einer Betriebsposition in einer Übertragungsstellung zueinander positioniert werden, die zum Übertragen der elektrischen Energie ausgebildet ist.

Die Sitzanordnung kann beispielsweise als ein oder als mehrere Einzelsitze zur Nutzung durch jeweils eine Person oder als Sitzbank zur Nutzung durch mehrere Nutzer ausgebildet sein. Die Sitzanordnung ist derart am Kraftrad angeordnet, dass diese bei Bedarf teilweise von dem Kraftrad gelöst werden kann. Dies kann beispielsweise durch eine Aufklappbewegung der Sitzanordnung relativ zu der Fahrzeugstruktur des Kraftrades erfolgen. Die Sitzanordnung kann hierbei aus einer geschlossenen Position, also der zur Nutzung des Kraftrades vorgesehenen "Betriebsposition", in eine aufgeklappte Position gebracht werden, in der beispielsweise ein unterhalb der Sitzordnung angeordnetes Staufach zugänglich ist.

Alternativ kann die Sitzanordnung aber auch vollständig von dem Neigefahrzeug gelöst werden, indem die am Kraftrad befestigte Sitzanordnung von diesem abgenommen und entfernt wird.

In jedem Fall weist die beschriebene Sitzanordnung die elektrisch betreibbare Vorrichtung auf. Diese ist beispielsweise in der Sitzanordnung integriert oder an dieser vorgesehen, und stellt einen elektrisch betreibbaren Verbraucher dar, der zu seinem Betrieb mit elektrischer Energie, insbesondere mit elektrischem Strom, versorgt werden muss.

Hierzu weist das Kraftrad die Energieübertragungsvorrichtung auf, welche zumindest die beiden beschriebenen Abschnitte aufweist: (i) den ersten Leitungsabschnitt und (ii) den zweiten Leitungsabschnitt. Selbstverständlich können auch weitere Leitungsabschnitte vorgesehen sein.

Jedenfalls ist der erste Leitungsabschnitt elektrisch leitend, beispielsweise durch ein stromleitendes Kabel, mit der Energiequelle verbunden. Außerdem kann der erste Leitungsabschnitt an einer Oberfläche der Fahrzeugstruktur angeordnet oder in der Fahrzeugstruktur integriert sein. Hierbei kann der erste Leitungsabschnitt vorzugsweise unterhalb der Sitzanordnung positioniert sein. Außerdem kann der erste Leitungsabschnitt Teil eines Kabelbaums sein. Ebenfalls vorzugsweise ist der erste Leitungsabschnitt vorzugsweise fahrzeugfest montiert.

Der zweite Leitungsabschnitt ist - wie beschrieben - der Sitzanordnung zugeordnet und kann hierzu in dieser integriert oder an dieser angeordnet sein. Auch der zweite Leitungsabschnitt kann fest angeordnet sein, also in diesem Fall fest an oder in der Sitzanordnung befestigt sein.

Jedenfalls ist der zweite Leitungsabschnitt dazu vorgesehen einen elektrischen Strom zum Betrieb der elektrisch betreibbaren Vorrichtung bereitzustellen. Hierzu kann der zweite Leitungsabschnitt elektrisch leitend, beispeilsweise durch ein stromleitendes Kabel, mit der elektrisch betreibbaren Vorrichtung verbunden sein.

Um eine einfache Lösbarkeit der Sitzanordnung bereitstellen zu können ist eine Verbindung zur Übertragung der elektrischen Energie zwischen dem ersten Leitungsabschnitt und dem zweiten Leitungsabschnitt nicht fest verdrahtet. Es wird also auf ein durchgängiges Stromkabel oder eine manuell zu verbindende Steckverbindung verzichtet.

Stattdessen ist die beschriebene Energieübertragungsvorrichtung derart ausgebildet, dass allein die Anordnung der Sitzanordnung in ihrer Betriebsposition ausreicht, um eine Übertragung der elektrischen Energie zu ermöglichen. Hierbei werden die beiden Leitungsabschnitt in die Übertragungsstellung gebracht, in der die Übertragung von elektrischer Energie möglich ist.

Je nach Ausgestaltung der Energieübertragungsvorrichtung, die nachfolgend im Detail beschrieben werden, ist die Übertragungsstellung derart definiert, dass der erste Leitungsabschnitt und der zweite Leitungsabschnitt zur Übertragung von elektrischer Energie in der Übertragungsstellung zumindest benachbart zueinander angeordnet oder in direkten elektrisch leitenden Kontakt miteinander gebracht werden. Dies bedeutet, dass der erste Leitungsabschnitt und der zweite Leitungsabschnitt an zueinander gegenüberliegenden Positionen der Fahrzeugstruktur und der Sitzanordnung angeordnet sind, wenn die Sitzanordnung sich in der Betriebsposition und damit die beiden Leitungsabschnitte in die Übertragungsstellung befinden.

Eine Steckverbindung oder Kabelverbindung zwischen beiden Abschnitten wird auf diese Weise vermeiden.

Diese Ausgestaltung bedeutet aber auch, dass ein Lösen der Sitzordnung von dem Fahrzeug die Übertragungsmöglichkeit von elektrischer Energie unterbricht, da durch das teilweise oder vollständige Lösen der Sitzanordnung der zweite Leitungsabschnitt von dem ersten Leitungsabschnitt beabstandet und somit aus der Übertragungsstellung entfernt wird.

Als Kraftrad sind insbesondere Neigefahrzeuge oder Einspurfahrzeuge, wie Motorräder oder Motorroller zu versehen, aber auch Quads oder Trikes.

Zum Beispiel kann die elektrisch betreibbare Vorrichtung eine Heizvorrichtung zum Heizen der Sitzfläche und/oder eine Lüftungsvorrichtung zum Belüften der Sitzfläche und/oder eine Kühlvorrichtung zum Kühlen der Sitzfläche umfassen. Selbstverständlich können zusätzlich oder alternativ hierzu weitere elektrische Verbraucher von der elektrisch betreibbaren Vorrichtung umfasst sein, wie beispielsweise eine elektrisch betreibbare Sitzverstellung, eine elektrisch betreibbare Massagevorrichtung, ein elektrisch betreibbarer Vibrationsgeber zur taktilen Signalerzeugung, und viele andere.

Gemäß einer Ausführungsform können der erste Leitungsabschnitt und der zweite Leitungsabschnitt in der Übertragungsstellung elektrisch leitend und lösbar miteinander verbunden sein. Hierzu kann der erste Leitungsabschnitt mit dem zweiten Leitungsabschnitt lösbar in elektrisch leitendem Kontakt stehen beziehungsweise in Kontakt gebracht werden, beispielsweise durch Auflegen und/oder loses Beaufschlagen des zweiten Leitungsabschnitts. Jedenfalls kann ein elektrischer Strom über den ersten Leitungsabschnitt bereitgestellt und über den zweiten Leitungsabschnitt zu der elektrisch betreibbaren Vorrichtung geleitet werden, um diese zu betreiben.

Zum Beispiel kann der erste elektrische Leitungsabschnitt mindestens eine erste Kontaktfläche aufweisen und der zweite elektrische Leitungsabschnitt mindestens eine zweite Kontaktfläche aufweisen, wobei das Anordnen der Sitzanordnung in der Betriebsposition eine elektrische Kontaktierung der mindestens einen ersten Kontaktfläche mit der mindestens einen zweiten Kontaktfläche bewirkt. In dieser Ausgestaltung werden also die jeweiligen Kontaktflächen in lösbaren Kontakt miteinander gebracht beziehungsweise wird eine lösbare Beaufschlagung bereitgestellt, die allein durch das Bewegen der Sitzanordnung wahlweise gelöst oder hergestellt werden kann.

Entsprechend kann in diesem Fall die mindestens eine erste Kontaktfläche und die mindestens eine zweite Kontaktfläche an zueinander gegenüberliegenden Positionen der Fahrzeugstruktur und der Sitzanordnung angeordnet und befestigt sein.

Wird die Sitzanordnung aus einer gelösten oder zumindest teilweise gelösten Stellung in die Betriebsposition gebracht, so werden der eine oder die mehreren Kontaktflächen des ersten Leitungsabschnitts mit einer oder mehreren entsprechenden Kontaktflächen des zweiten Leitungsabschnitts in Kontakt gebracht, um eine elektrische Stromleitung und damit eine Übertragung von elektrischer Energie zum Betrieb der Vorrichtung bereitzustellen.

Zum Beispiel ist die mindestens eine erste Kontaktfläche und/oder die mindestens eine zweite Kontaktfläche beweglich ausgebildet und mittels eines Federelements vorgespannt sind, um die jeweils andere Kontaktfläche zu beaufschlagen. Hierzu kann die jeweilige Kontaktfläche Teil eines jeweiligen Kontaktelementes sein, welches mit einer Halterung fest (direkt oder indirekt) an der Fahrzeugstruktur oder der Sitzanordnung befestigt ist und gegenüber dieser Halterung translatorisch und/oder rotatorisch und/oder elastisch verformbar bewegbar ist.

Des Weiteren kann das Kraftrad eine bewegliche Abdeckung aufweisen, welche die mindestens eine erste Kontaktfläche in einer vom Kraftrad gelösten Position der Sitzanordnung teilweise oder vollständig abdeckt, und beim Anordnen der Sitzanordnung in der Betriebsposition derart bewegt wird, dass die bewegliche Abdeckung die mindestens eine erste Kontaktfläche freigibt.

Auf diese Weise wird die mindestens eine erste Kontaktfläche im nicht genutzten Zustand verdeckt, so dass eine unbeabsichtigte Kontaktierung und eine eventuelle Kurzschlussgefahr ausgeschlossen werden können.

Zum Beispiel kann die bewegliche Abdeckung ein Deckel oder eine Schiebevorrichtung sein.

Alternativ oder zusätzlich zu der beweglichen Abdeckung kann zumindest die mindestens eine erste Kontaktfläche gegenüber einem umgebenden Rand versenkt angeordnet oder versenkbar ausgebildet sein. Auch auf diese Weise lässt sich eine unbeabsichtigte Kontaktierung (zusätzlich) vermeiden.

Erfindungsgemäß ist der erste Leitungsabschnitt und der zweite Leitungsabschnitt in der Übertragungsstellung mittels Induktion zur Übertragung der elektrischen Energie wirkgekoppelt.

Dies bedeutet, dass keine unmittelbare elektrisch leitende Kontaktierung zwischen dem ersten Leitungsabschnitt und dem zweiten Leitungsabschnitt hergestellt wird. Stattdessen werden die beiden Leitungsabschnitte benachbart, jedoch ohne direkten elektrischen Kontakt zueinander angeordnet, so dass mittels Induktion ein Stromfluss in dem zweiten Leitungsabschnitt erzeugt wird, der den Betrieb der elektrisch betreibbaren Vorrichtung ermöglicht. Hierzu kann der erste Leitungsabschnitt ein sich veränderndes Magnetfeld erzeugen, welches in dem benachbart angeordneten zweiten Leitungsabschnitt einen elektrischen Strom erzeugt.

Vorzugsweise können hierzu der erste Leitungsabschnitt und der zweite Leitungsabschnitt jeweils eine Leiterschleife oder eine Leiterspule zur Übertragung der elektrischen Energie mittels Induktion umfassen. Zur benachbarten Anordnung der jeweiligen Leiterschleife oder Leiterspule kann diese in oder an einer der Sitzanordnung zugewandten ersten Position der Fahrzeugstruktur vorgesehen sein. Entsprechend ist die jeweilige Leiterschleife oder Leiterspule des zweiten Leitungsabschnitts in oder an einer der ersten Position zugewandten und angrenzend (oder zumindest benachbart) zu dieser angeordneten zweiten Position der Sitzanordnung, vorzugsweise in oder an einer Unterseite einer Sitzwanne der Sitzanordnung, vorgesehen.

In jedem der Fälle wird also eine elektrische Energieübertragung zwischen Fahrzeug und Sitzbank bereitgestellt, die steckerlos ausgebildet ist, entweder durch fest vorgesehene elektrische Kontakte beziehungsweise Kontaktflächen, die miteinander in lösbaren Kontakt gebracht werden, oder über eine induktive Kopplung zwischen Kraftrad und dessen Sitzanordnung.

Die Erfindung wird nachfolgend anhand eines Ausführungsbeispiels unter Bezugnahme auf die Zeichnungen näher erläutert. Es zeigen:
- Fig. 1:: eine perspektivische Ansicht einer ersten Ausführungsform eines Kraftrades mit entfernter Sitzanordnung,
- Fig. 2:: eine perspektivische Ansicht einer Oberseite eines Sitzes einer Sitzanordnung für das Kraftrad gemäß Fig. 1 und
- Fig. 3:: eine perspektivische Ansicht einer Unterseite des Sitzes gemäß Fig. 2.
- Fig. 4:: eine seitliche Schnittansicht des Sitzes gemäß Fig. 2 und 3 in einer Betriebsposition,
- Fig. 5:: eine perspektivische Ansicht einer zweiten Ausführungsform eines Kraftrades mit entfernter Sitzanordnung,
- Fig. 6:: eine perspektivische Ansicht einer Unterseite eines Sitzes einer Sitzanordnung für das Kraftrad gemäß Fig. 5 und
- Fig. 7:: eine seitliche Schnittansicht des Sitzes gemäß Fig. 6 in einer Betriebsposition.

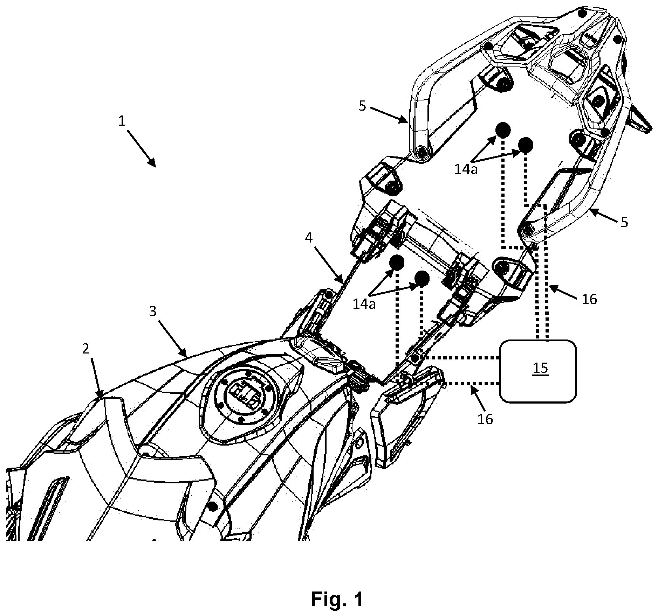

Fig. 1 zeigt eine perspektivische Ansicht eines Kraftrades 1, mit abgenommener Sitzanordnung 10. Das Kraftrad 1 ist beispielhaft als Motorrad dargestellt, welches lediglich optional ein Windschild 2, einen Tank 3 und eine Fahrzeugstruktur 4 aufweist. In einem Heckbereich der Fahrzeugstruktur 4 sind zudem ebenfalls rein optionale Haltegriffe 5 für einen Sozius angeordnet. Anstelle eines Motorrades kann das Kraftrad 1 aber auch ein anderes Neigefahrzeug oder Einspurfahrzeug sein, wie beispielsweise ein Motorroller oder Scooter, aber auch ein Quad oder Trike.

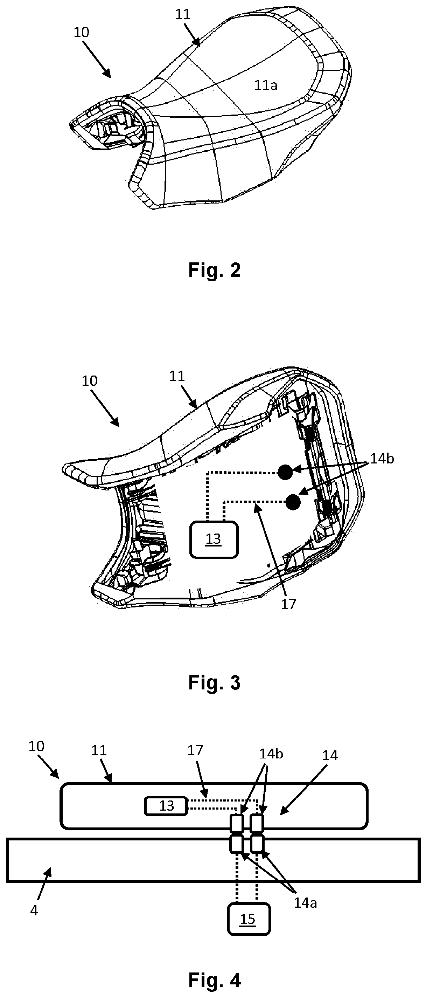

Die zugehörige Sitzanordnung 10 ist zweiteilig ausgebildet und umfasst zwei (Einzel-)Sitze 11, einen Fahrersitz und einen Soziussitz, die gemeinsam die Sitzanordnung 10 bilden. Die Fig. 2 bis 4 zeigen einen der beiden Sitze 11, nämlich den Fahrersitz. Der Soziussitz kann jedoch den identischen Aufbau aufweisen und sich gegebenenfalls in der Ausgestaltung der Sitzform unterscheiden.

Jeder der beiden Sitze 11 der Sitzanordnung 10 bildet eine Sitzfläche 11a für den Fahrer oder den Sozius und weist jeweils eine elektrisch betreibbare Vorrichtung 13 auf. Diese ist in dem jeweiligen Sitz 11 integriert und stellt einen elektrisch betreibbaren Verbraucher dar, der zu seinem Betrieb mit elektrischer Energie, insbesondere mit elektrischem Strom, versorgt werden muss.

Die elektrisch betreibbare Vorrichtung 13 kann zum Beispiel eine Heizvorrichtung zum Heizen der Sitzfläche11a, also eine Sitzheizung, umfassen. Alternativ oder zusätzlich kann die elektrische Vorrichtung eine Lüftungsvorrichtung zum Belüften der Sitzfläche 11a und/oder eine Kühlvorrichtung zum Kühlen der Sitzfläche 11a und/oder eine elektrisch betreibbare Sitzverstellung und/oder eine elektrisch betreibbare Massagevorrichtung und/oder einen elektrisch betreibbaren Vibrationsgeber zur taktilen Signalerzeugung umfassen.

Des Weiteren weist das Kraftrad 1 eine Energieübertragungsvorrichtung 14 auf, die mit der jeweiligen elektrisch betreibbaren Vorrichtung 13 zur Versorgung mit elektrischer Energie verbunden ist.

Die Energieübertragungsvorrichtung 14 weist auf:
a. einen ersten Leitungsabschnitt 14a, der der Fahrzeugstruktur 4 zugeordnet und mit einer Energiequelle 15 gekoppelt ist, und
b. einen zweiten Leitungsabschnitt 14b, welcher dem jeweiligen Sitz 11 der Sitzanordnung 10 zugeordnet und mit der elektrisch betreibbaren Vorrichtung 13 elektrisch leitend verbunden ist.

Des Weiteren ist die Energieübertragungsvorrichtung 14 derart ausgebildet, dass der erste Leitungsabschnitt 14a und der zweite Leitungsabschnitt 14b allein durch Anordnen der Sitzanordnung 10 in eine Betriebsposition in einer Übertragungsstellung zueinander positioniert werden, die zum Übertragen der elektrischen Energie ausgebildet ist. Fig. 4 zeigt in lediglich schematischer Darstellung diese Betriebsposition der Sitzanordnung 10, in der diese auf der Fahrzeugstruktur 4 des Kraftrades 1 angeordnet ist. Hierbei sind der erste Leitungsabschnitt 14a und der zweite Leitungsabschnitt 14b in der nachfolgend noch näher beschriebenen Übertragungsstellung angeordnet, in der die beiden Leitungsabschnitte 14a,14b an zueinander gegenüberliegenden Positionen der Fahrzeugstruktur 4 und der Sitzanordnung 14 befestigt sind.

Hierbei ist der erste Leitungsabschnitt 14a elektrisch leitend durch ein stromleitendes Kabel 16 mit der Energiequelle 15 verbunden und in der Fahrzeugstruktur 4 integriert beziehungsweise fahrzeugfest unterhalb der Sitzanordnung 10 montiert.

Der zweite Leitungsabschnitt 14b ist in dem Sitz 11 der Sitzanordnung 10 integriert und befestigt, und elektrisch leitend durch ein stromleitendes Kabel 17 mit der elektrisch betreibbaren Vorrichtung 13 verbunden.

Gemäß einer nicht beanspruchten Ausführungsform (gemäß den Fig. 1 bis 4) sind der erste Leitungsabschnitt 14a und der zweite Leitungsabschnitt 14b derart ausgebildet, dass beide Leitungsabschnitte 14a,14b in der Übertragungsstellung elektrisch leitend und dennoch lösbar miteinander verbunden sind. Hierzu wird der erste Leitungsabschnitt 14a elektrisch leitend mit dem zweiten Leitungsabschnitt 14b lösbar in Kontakt gebracht. So kann ein elektrischer Strom über den ersten Leitungsabschnitt 14a bereitgestellt und über den zweiten Leitungsabschnitt 14b zu der elektrisch betreibbaren Vorrichtung 13 geleitet werden, um diese zu betreiben.

Hierzu weist der erste elektrische Leitungsabschnitt 14a zwei erste Kontaktflächen 14 auf, die beim Anordnen der Sitzanordnung 10 in der Betriebsposition in elektrisch leitenden, aber dennoch lösbaren Kontakt mit zwei zweiten Kontaktflächen des zweiten elektrischen Leitungsabschnitts 14b gebracht werden. Die Kontaktierung wird in diesem Fall durch eine lösbare Beaufschlagung bereitgestellt, die allein durch das Bewegen der Sitzanordnung 10 gelöst oder hergestellt werden kann, um eine elektrische Stromleitung und damit eine Übertragung von elektrischer Energie zum Betrieb der Vorrichtung 13 bereitzustellen.

Trotz fester Anordnung des ersten Leitungsabschnitts 14a und des zweiten Leitungsabschnitts 14b können die ersten Kontaktflächen und/oder die zweiten Kontaktflächen beweglich ausgebildet sein, indem diese jeweils mittels eines Federelements vorgespannt sind, um die jeweils andere Kontaktfläche mittels der erzeugten Federkraft zu beaufschlagen. Auf diese Weise kann eine verbesserte Kontaktierung sichergestellt werden.

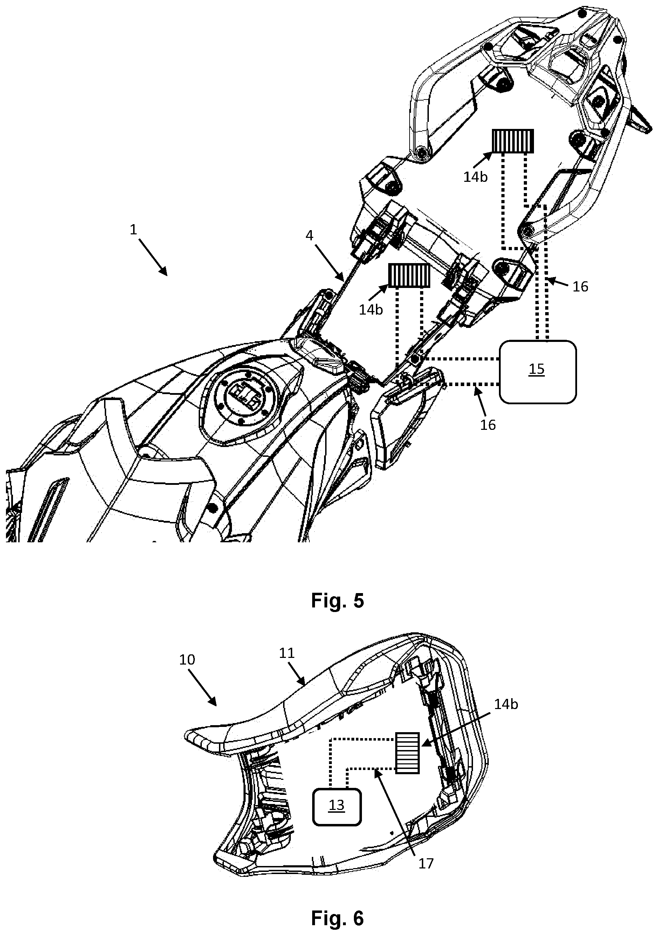

Die erfindungsgemäße Ausführungsform (gemäß den Fig. 5 bis 7) des beschriebenen Kraftrades 1 entspricht mit Ausnahme der Energieübertragungsvorrichtung 14 der nicht beanspruchten Ausführungsform (gemäß den Fig. 1 bis 4), so dass auf die dortige Beschreibung verwiesen wird, die in gleicher Weise auch für die erfindungsgemäße Ausführungsform zutreffend ist. Ein Unterschied stellt die konkrete Ausgestaltung der Energieübertragungsvorrichtung 14 dar, die eine Energieübertragung mittels Induktion anstelle einer unmittelbaren elektrisch leitenden Kontaktierung zwischen dem ersten Leitungsabschnitt 14a und dem zweiten Leitungsabschnitt 14b vorsieht.

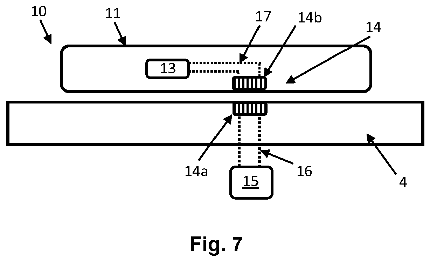

Wie in den Fig. 5 bis 7 dargestellt, kann hierzu der erste Leitungsabschnitt 14a und der zweite Leitungsabschnitt 14b in der Übertragungsstellung (gemäß Fig. 7) mittels Induktion zur Übertragung der elektrischen Energie wirkgekoppelt werden. Es werden die beiden Leitungsabschnitte 14a,14b benachbart, jedoch ohne direkten elektrischen Kontakt zueinander angeordnet, so dass mittels Induktion ein Stromfluss in dem zweiten Leitungsabschnitt 14b erzeugt wird, der den Betrieb der elektrisch betreibbaren Vorrichtung 13 ermöglicht.

Hierzu umfassen der erste Leitungsabschnitt 14a und der zweite Leitungsabschnitt 14b jeweils eine (lediglich schematisch angedeutete) Leiterspule zur Übertragung der elektrischen Energie mittels Induktion. Zur benachbarten Anordnung beider Leiterspulen ist die jeweilige erste Leiterspule des ersten Leitungsabschnitts 14a in einer der Sitzanordnung 20 zugewandten ersten Position der Fahrzeugstruktur 4 vorgesehen. Entsprechend ist die zweite Leiterspule des zweiten Leitungsabschnitts 14b in einer der ersten Position der Fahrzeugstruktur 4 zugewandten und angrenzend (oder zumindest benachbart) zu dieser angeordneten zweiten Position der Fahrzeugstruktur 4 vorgesehen.

## Patentansprüche

1. Kraftrad (1) mit einer vollständig oder zumindest teilweise von dem Kraftrad (1) lösbaren Sitzanordnung (10), wobei die Sitzanordnung (10) eine Sitzfläche (11a) für einen Nutzer bildet und eine elektrisch betreibbare Vorrichtung (13) aufweist, wobei die elektrisch betreibbare Vorrichtung (13) zur Versorgung mit elektrischer Energie mit einer Energieübertragungsvorrichtung (14) verbunden ist, welche
a. einen ersten Leitungsabschnitt (14a), der einer Fahrzeugstruktur (4) zugeordnet und mit einer Energiequelle (15) gekoppelt ist, und
b. einen zweiten Leitungsabschnitt (14b), welcher der Sitzanordnung (10) zugeordnet und mit der elektrisch betreibbaren Vorrichtung (13) elektrisch leitend verbunden ist, aufweist,
**dadurch gekennzeichnet, dass** die Energieübertragungsvorrichtung (14) derart ausgebildet ist, dass der erste Leitungsabschnitt (14a) und der zweite Leitungsabschnitt (14b) mittels Anordnens der Sitzanordnung (10) in einer Betriebsposition in einer Übertragungsstellung zueinander positioniert werden, die zum Übertragen der elektrischen Energie ausgebildet ist, und
dass der erste Leitungsabschnitt (14a) und der zweite Leitungsabschnitt (14b) in der Übertragungsstellung mittels Induktion zur Übertragung der elektrischen Energie wirkgekoppelt sind.

2. Kraftrad (1) nach Anspruch 1, **dadurch gekennzeichnet, dass** die elektrisch betreibbare Vorrichtung (13) eine Heizvorrichtung zum Heizen der Sitzfläche (11a) und/oder eine Lüftungsvorrichtung zum Belüften der Sitzfläche (11a) und/oder eine Kühlvorrichtung zum Kühlen der Sitzfläche (11a) umfasst.

3. Kraftrad (1) nach Anspruch 1 oder 2, **dadurch gekennzeichnet, dass** der erste Leitungsabschnitt (14a) und der zweite Leitungsabschnitt (14b) jeweils eine Leiterschleife oder eine Leiterspule zur Übertragung der elektrischen Energie mittels Induktion umfassen.

## Claims

1. Motorcycle (1) with a seat arrangement (10) which can be completely or at least partially detached from the motorcycle (1), wherein the seat arrangement (10) forms a seating surface (11a) for a user and has an electrically operable device (13), wherein the electrically operable device (13) is connected to an energy transmission device (14) for supply with electrical energy, which comprises
a. a first line section (14a), which is assigned to a vehicle structure (4) and is coupled to an energy source (15), and
b. a second line section (14b), which is assigned to the seat arrangement (10) and is electrically conductively connected to the electrically operable device (13),
**characterized in that** the energy transmission device (14) is designed such that the first line section (14a) and the second line section (14b) are positioned relative to one another by arranging the seat arrangement (10) in an operating position in a transmission position, which is designed for transmitting the electrical energy, and
that the first line section (14a) and the second line section (14b) are operatively coupled in the transmission position by means of induction for the transmission of the electrical energy.

2. Motorcycle (1) according to claim 1, **characterized in that** the electrically operable device (13) comprises a heating device for heating the seating surface (11a) and/or a ventilation device for ventilating the seating surface (11a) and/or a cooling device for cooling the seating surface (11a).

3. Motorcycle (1) according to claim 1 or 2, **characterized in that** the first line section (14a) and the second line section (14b) each comprise a conductor loop or a conductor coil for transmitting the electrical energy by means of induction.

## Revendications

1. Motocycle (1) avec un agencement de siège (10) qui peut être détaché complètement ou au moins partiellement du motocycle (1), l'agencement de siège (10) formant une surface d'assise (11a) pour un utilisateur et comportant un dispositif à fonctionnement électrique (13), le dispositif à fonctionnement électrique (13) étant relié à un dispositif de transmission d'énergie (14) pour l'alimentation en énergie électrique, lequel comprend
a. une première section de ligne (14a), qui est associée à une structure de véhicule (4) et est couplée à une source d'énergie (15), et
b. une deuxième section de ligne (14b), qui est associée à l'agencement de siège (10) et est reliée de manière électriquement conductrice au dispositif à fonctionnement électrique (13),
**caractérisé en ce que** le dispositif de transmission d'énergie (14) est conçu de telle sorte que la première section de ligne (14a) et la deuxième section de ligne (14b) sont positionnées l'une par rapport à l'autre au moyen de l'agencement de l'agencement de siège (10) dans une position de fonctionnement dans une position de transmission, qui est conçue pour transmettre l'énergie électrique, et
**en ce que** la première section de ligne (14a) et la deuxième section de ligne (14b) sont couplées de manière opérationnelle dans la position de transmission au moyen d'induction pour la transmission de l'énergie électrique.

2. Motocycle (1) selon la revendication 1, **caractérisé en ce que** le dispositif à fonctionnement électrique (13) comprend un dispositif de chauffage pour chauffer la surface d'assise (11a) et/ou un dispositif de ventilation pour ventiler la surface d'assise (11a) et/ou un dispositif de refroidissement pour refroidir la surface d'assise (11a).

3. Motocycle (1) selon la revendication 1 ou 2, **caractérisé en ce que** la première section de ligne (14a) et la deuxième section de ligne (14b) comprennent chacune une boucle de conducteur ou une bobine de conducteur pour transmettre l'énergie électrique au moyen d'induction.
